# EUROPEAN PATENT APPLICATION

(11) **EP 4 847 982 A1**
(43) Date of publication of application: **02.12.2026**
(21) Application number: 25181933.0
(22) Date of filing: 11.06.2025
(51) Int. Cl.: G02B 17/08, G02B 19/00, G02B 27/01, G02B 26/08

(54) **IMAGING MODULE, NEAR-EYE DISPLAY DEVICE AND HEAD-MOUNTED DISPLAY DEVICE**

(30) Priority: 28.05.2025 CN 202510702181
(71) Applicant: Deepeye Technology Pte. Ltd., Singapore 408729 (SG)
(72) Inventor: ZHANG, MIN, OXLEY BIZHUB SINGAPORE (408729) (SG)
(74) Representative: Temiño Ceniceros, Ignacio

(57) **Abstract**

An imaging module, a near-eye display device and a head-mounted display device are disclosed. The head-mounted display device includes: a linear array image source (1100), a refractive curved mirror (1200), a first planar mirror (1301) and a second planar mirror (1302), the first planar mirror (1301) and the second planar mirror (1302) are both located on a same side as a mirror surface of the refractive curved mirror (1200), and are spaced apart to form an incidence groove (1303) for light from the linear array image source (1100); the light is reflected between the refractive curved mirror (1200) and the first planar mirror (1301), the refractive curved mirror (1200) reflects the light to the second planar mirror (1302), the light is emitted from the imaging module (1000), the second planar mirror (1302) is closer to an emitting surface of the imaging module (1000) than the first planar mirror (1301).

## Description

### TECHNICAL FIELD

The present application relates to the field of near-eye display technology, and more particularly, to an imaging module, a near-eye display device, and a head-mounted display device.

### BACKGROUND

In current AR and VR equipment, most devices use a sequential lens module to position the image near the focal plane, thereby producing an enlarged virtual image. Alternatively, a refractive concave mirror is used for primary reflection into an enlarged virtual image.

The diagonal field of view in AR devices that use a sequential lens module is relatively narrow, typically ranging from 15 to 40 degrees. As a result, such AR devices can only serve as information prompt near-eye devices and are not suitable for tasks like office work or movie viewing. Although the diagonal field of view of AR or VR devices using refractive concave mirror primary reflection imaging is more than 40 degrees, or even 50 degrees at the maximum, they are all relatively large, with a minimum thickness of 16mm, and the weight of a single display AR or VR device externally connected to the battery and motherboard exceeds 100 grams, which will be even heavier if they are made into an all-in-one machine.

### SUMMARY

In order to address at least one of the above technical problems, the present application provides an imaging module, a near-eye display device and a head-mounted display device, and the adopted technical scheme is as follows.

The head-mounted display device provided in the present application includes a near-eye display device.

The near-eye display device provided in the present application includes a scanning MEMS (Micro Electron Mechanical Systems) mirror, an optical waveguide lens and an imaging module. One side of the imaging module on which light is emitted is adjacent to the optical waveguide lens. One end of the optical waveguide lens adjacent to the imaging module is provided with a transmission surface. The transmission surface is configured as a light-transmitting inclined plane. The scanning MEMS mirror is adjacent to the transmission surface.

According to some embodiments of the present application, the optical waveguide lens is configured as an array optical waveguide lens or a diffractive optical waveguide lens.

The imaging module provided in the present application includes a linear array image source, a refractive curved mirror, a first planar mirror and a second planar mirror. The first planar mirror and the second planar mirror are both located on a same side as a mirror surface of the refractive curved mirror. The first planar mirror and the second planar mirror are spaced apart to form an incidence groove. The light from the linear array image source is reflected between the refractive curved mirror and the first planar mirror at least twice. The refractive curved mirror reflects the light to the second planar mirror, and after being reflected by the second planar mirror, the light is emitted from the imaging module. The second planar mirror is closer to an emitting surface of the imaging module than the first planar mirror.

According to some embodiments of the present application, the imaging module is replaceably configured to include a solid light-transmitting structure and the linear array image source. A surface of the solid light-transmitting structure is coated with a reflective film to form the refractive curved mirror, the first planar mirror, and the second planar mirror. The first planar mirror is closer to the emitting surface of the imaging module than the second planar mirror.

According to some embodiments of the present application, an included angle between a mirror surface of the first planar mirror and a chord of a curved surface of the refractive curved mirror is A, where A satisfies: 2 degrees ≤ A ≤ 8 degrees.

According to some embodiments of the present application, an included angle between a mirror surface of the first planar mirror and a mirror surface of the second planar mirror is C, where C satisfies: 177 degrees ≤ C ≤ 183 degrees.

According to some embodiments of the present application, an included angle between a mirror surface of the first planar mirror and a mirror surface of the second planar mirror is C, where C satisfies: 140 degrees ≤ C ≤ 150 degrees.

According to some embodiments of the present application, an incidence angle of the light from the linear array image source on the refractive curved mirror is B, where B satisfies: 3 degrees ≤ B ≤ 12 degrees.

According to some embodiments of the present application, an included angle between a mirror surface of the second planar mirror and a chord of a curved surface of the refractive curved mirror is E, where E satisfies: 30 degrees ≤ E ≤ 40 degrees.

The present application achieves at least the following beneficial effects: The imaging module in the near-eye display device is provided with a first planar mirror and a second planar mirror for the refractive curved mirror, the light from the linear array image source enters the refractive curved mirror from the incidence groove, and after the light is reflected between the refractive curved mirror and the first planar mirror for at least two times, the refractive curved mirror reflects the light to the second planar mirror, and the second planar mirror reflects the light and the light is emitted from the imaging module to the optical waveguide lens. The light is emitted from the transmission surface of the optical waveguide lens to the scanning MEMS mirror, the scanning MEMS mirror reflects the light and the light enters the optical waveguide lens from the transmission surface, and the optical waveguide lens splits the light and emits it to the observation area of human eyes, thus achieving a good imaging effect. The imaging module utilizes multiple reflections of the refractive curved mirror to enlarge the equivalent focal length and reduce the volume of the imaging module. The present application can be widely applied to the technical field of near-eye display.

Additional aspects and advantages of the present application will be set forth in part in the following description, which will be apparent from the following description, or may be learned by practice of the present application.

### BRIEF DESCRIPTION OF DRAWINGS

The present application will be further illustrated with the attached drawings and examples. It should be noted that the embodiments embodied in the following drawings are exemplary and are only used to explain the present application, and cannot be understood as limitations of the present application.
Fig. 1 is a schematic structural diagram and a schematic light trajectory diagram according to some embodiments of the near-eye display device, in which the optical waveguide lens is an array optical waveguide lens.
Fig. 2 is a schematic structural diagram and a schematic light trajectory diagram according to some embodiments of the near-eye display device, in which the optical waveguide lens is a diffractive optical waveguide lens.
Fig. 3 is a schematic structural diagram and a schematic light trajectory diagram of the imaging module, the optical waveguide lens and the scanning MEMS mirror in figs. 1 and 2.
Fig. 4 is a schematic diagram of the relative positions of the linear array image source, the refractive curved mirror and the first planar mirror in the imaging module, and a schematic diagram of the included angle A and the incidence angle B.
Fig. 5 is a schematic diagram of three relative positions of the first planar mirror and the second planar mirror in the imaging module and a schematic diagram of the included angle C.
Fig. 6 is a schematic structural diagram and a schematic light trajectory diagram according to other embodiments of the near-eye display device.
Fig. 7 is a schematic structural diagram and a schematic light trajectory diagram of the imaging module, the optical waveguide lens and the scanning MEMS mirror in fig. 6.
Fig. 8 is a schematic diagram of the relative positions of the refractive curved mirror, the first planar mirror and the second planar mirror in the solid light-transmitting structure in fig. 6 and a schematic diagram of the included angles A, C and E.

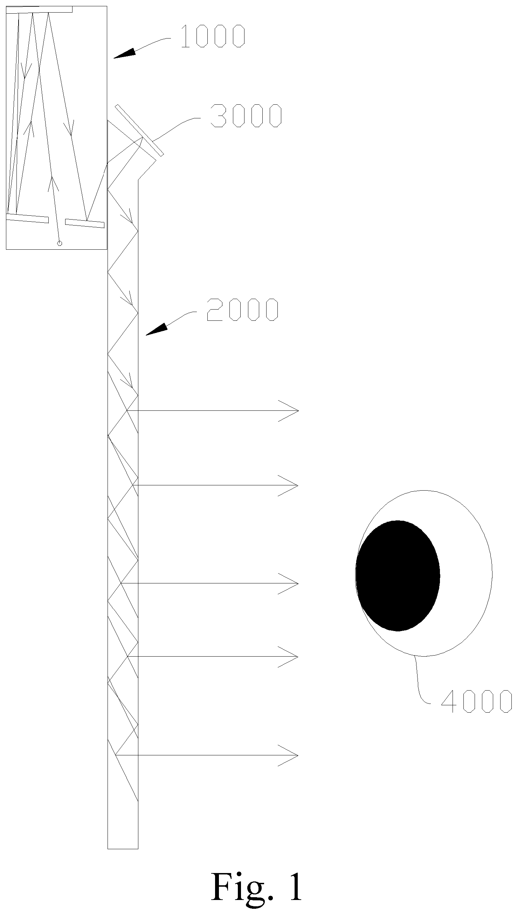

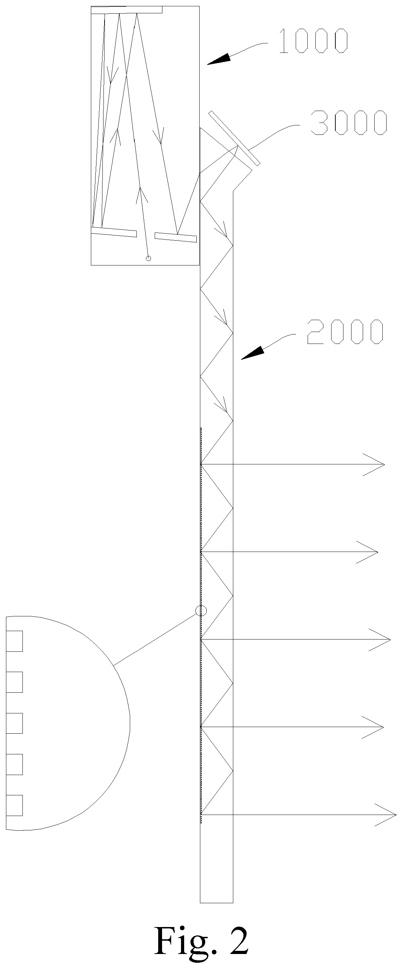

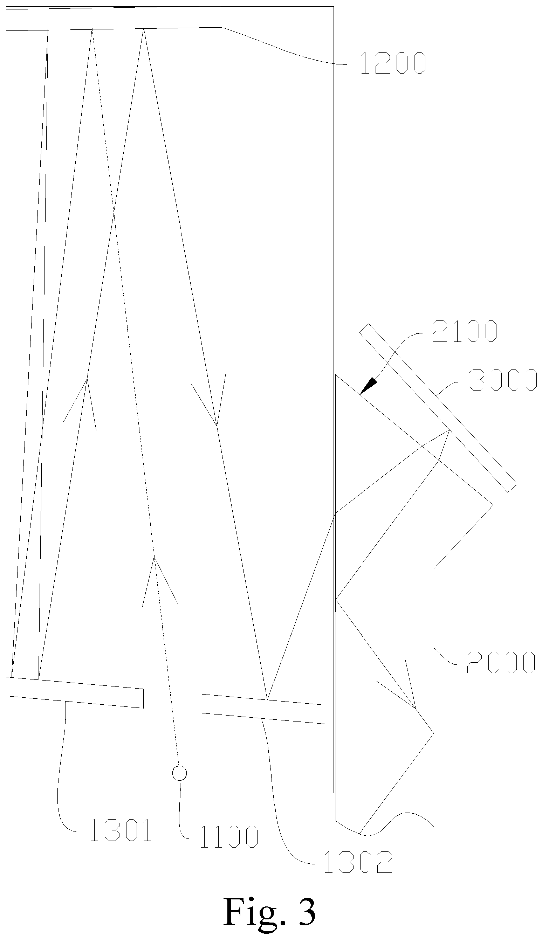

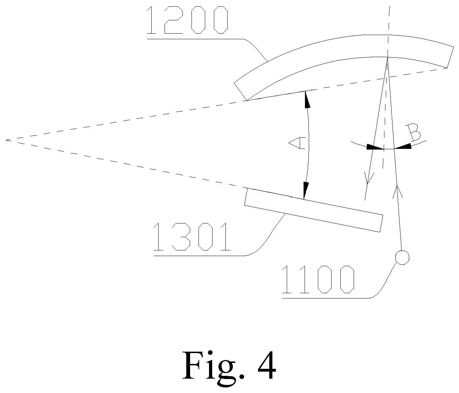

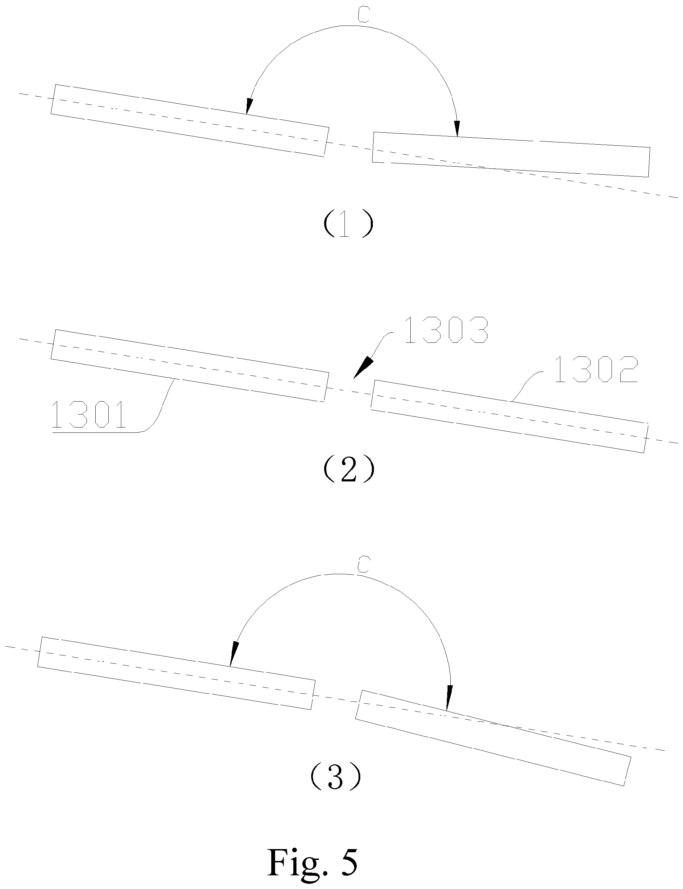

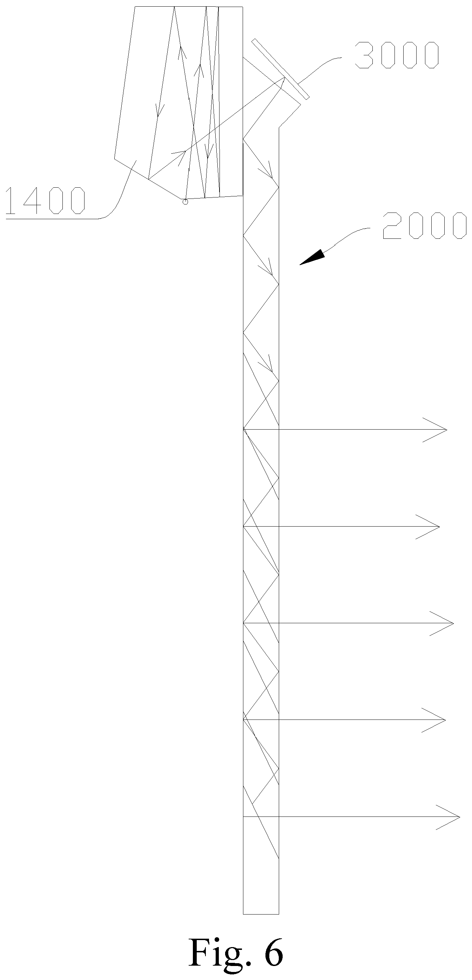

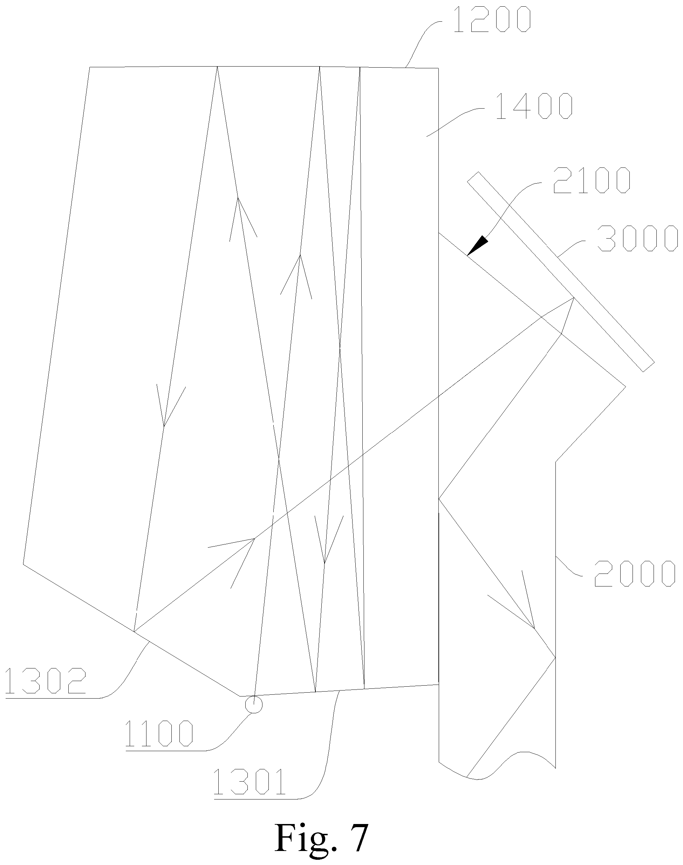

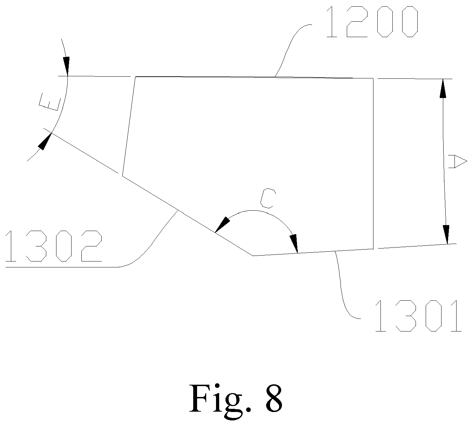

It should be noted that the structural schematic diagrams in figs. 1 to 8 only schematically show the relative position relationship of the structures in the imaging module and the near-eye display device, and do not limit the size of each structure.

Reference numerals:
1000 imaging module, 1100 linear array image source, 1200 refractive curved mirror, 1301 first planar mirror, 1302 second planar mirror, 1303 incidence groove, 1400 solid light-transmitting structure, 2000 optical waveguide lens, 2100 transmission surface, 3000 scanning MEMS mirror, 4000 human eyes.

### DETAILED DESCRIPTION

Embodiments of the present application will be described in detail with reference to figs. 1 to 8, wherein the same or similar reference numerals indicate the same or similar elements or elements with the same or similar functions throughout. The embodiments described below by referring to the drawings are exemplary and are only used to explain the present application, and cannot be understood as limitations of the present application.

In the description of the present application, it should be understood that if the terms "center", "middle", "longitudinal", "lateral", "length", "width", "thickness", "upper", "lower", "front", "behind", "left", "right" and "vertical", "horizontal", "top", "bottom", "inner", "outer", "axial", "radial" and "circumferential", etc. appear, the orientation or positional relationship indicated by them is based on the orientation or positional relationship shown in the attached drawings. It is only for the convenience of describing the present application and simplifying the description, and does not indicate or imply that the referred devices or elements must have a specific orientation, be constructed and operated in a specific orientation, so it cannot be understood as a limitation of the present application.

In the description of the present application, "several" means more than one, and "multiple" means more than two. "Greater than", "less than", "exceeding", etc. are understood as excluding this number, and "above", "below" and "within" are understood as including this number. If the descriptions "first" and "second", etc. appear, it is only intended for distinguishing technical features, it cannot be understood as indicating or implying relative importance or implicitly indicating the number of indicated technical features or implicitly indicating the sequence of indicated technical features.

In the description of the present application, unless otherwise specified and limited, the terms "installed", "mounted", "attached" and "connected" should be broadly understood. For example, they can be a fixed connection, a detachable connection or an integrated connection; they can be a mechanical connection or an electrical connection; they can be a direct connection or an indirect connection through an intermediate medium; they can be a connection inside two elements. For those skilled in the art, the specific meanings of the above terms in the present application can be understood in specific circumstances.

In the description of the present application, if the terms "one implementation", "some implementations", "one embodiment", "some cases", "some embodiments", "exemplary embodiments", "examples", "specific examples", "some examples", etc. appear, it means that specific features, structures, materials or characteristics described in connection with the embodiment or example are included in at least one embodiment or example of the present application. In this description, the schematic expressions of the above terms do not necessarily refer to the same embodiment or example. Moreover, the specific features, structures, materials or characteristics described may be combined in any one or more embodiments or examples in a suitable manner.

The present application relates to a head-mounted display device. The head-mounted display device comprises a near-eye display device. The near-eye display device has the advantages of light and thin structure, large field of view, high picture quality and less stray light.

The user wears the head-mounted display device on his head. **In** the near-eye display device, an imaging module 1000, an optical waveguide lens 2000 and a scanning MEMS mirror 3000 are used to realize imaging, thus providing users with virtual reality or augmented reality experience.

It should be noted that head-mounted display device includes, but is not limited to, a terminal product in the form of helmets or glasses.

Other structures and operations of the head-mounted display device have been described in the related art for those skilled in the art, and will not be described in detail herein. The structures of the near-eye display device and the imaging module 1000 will be introduced below.

The present application relates to a near-eye display device. The near-eye display device includes an imaging module 1000, an optical waveguide lens 2000 and a scanning MEMS mirror 3000. One side of the imaging module 1000 on which light is emitted is adjacent to the optical waveguide lens 2000. One end of the optical waveguide lens 2000 adjacent to the imaging module 1000 is provided with a transmission surface 2100. The scanning MEMS mirror 3000 is adjacent to the transmission surface 2100.

In some examples, the scanning MEMS mirror 3000 is configured as a uniaxial scanning MEMS mirror.

The present application relates to an imaging module 1000. The imaging module 1000 includes a refractive curved mirror 1200, a first planar mirror 1301 and a second planar mirror 1302. The first planar mirror 1301 and the second planar mirror 1302 are both located on a same side as a mirror surface of the refractive curved mirror 1200. The mirror surfaces of the first planar mirror 1301 and the second planar mirror 1302 both face the mirror surface of the refractive curved mirror 1200. The second planar mirror 1302 is closer to an emitting surface of the imaging module 1000 than the first planar mirror 1301.

Both the first planar mirror 1301 and the second planar mirror 1302 are spaced apart from the refractive curved mirror 1200, so that light is reflected and propagated between the refractive curved mirror 1200 and the first planar mirror 1301, and light is reflected and propagated between the refractive curved mirror 1200 and the second planar mirror 1302. It should be noted that the reflection of light in the imaging module is in the form of transparent medium propagation.

The imaging module 1000 further includes a linear array image source 1100. The imaging module 1000 is located on a same side as a mirror surface of the refractive curved mirror 1200. The first planar mirror 1301 and the second planar mirror 1302 are spaced apart. The gap between the first planar mirror 1301 and the second planar mirror 1302 forms an incidence groove 1303 for light. The distance from the linear array image source 1100 to the refractive curved mirror 1200 is greater than the distance from the incidence groove 1303 to the refractive curved mirror 1200. It can be understood that the light from the linear array image source 1100 passes through the incidence groove 1303 and enters the mirror surface of the refractive curved mirror 1200, and then the refractive curved mirror 1200 reflects the light to the mirror surface of the first planar mirror 1301.

Further, the light from the linear array image source 1100 enters the imaging module 1000 from the incidence groove 1303, and the light is biased to the side where the first planar mirror 1301 is located. The light is reflected between the refractive curved mirror 1200 and the first planar mirror 1301 at least twice. After that, the refractive curved mirror 1200 reflects the light to the second planar mirror 1302, and the light is reflected by the second planar mirror 1302 and then emitted from the imaging module 1000. It should be noted that the second planar mirror 1302 reflects the light once.

In the imaging module 1000 of the related art, the refractive curved mirror 1200 is only equipped with a planar mirror, and light is incident on the refractive curved mirror 1200, which reflects the light to the planar mirror, and the planar mirror reflects the light and completes the emitting of the light. In the imaging module 1000 designed in the present application, the refractive surface mirror 1200 is equipped with a first planar mirror 1301 and a second planar mirror 1302, and the effective object distance is increased by multiple reflections of light between the refractive surface mirror 1200 and the first planar mirror 1301. It not only achieves the enlargement of the equivalent focal length, but also reduces the volume of the imaging module 1000, which not only expands the diagonal field of view to over 90 degrees, and reduces the total thickness of the near-eye display device including the imaging module 1000. The total thickness of the near-eye display device including the imaging module 1000 can be reduced to no more than 8 mm.

On the other hand, the imaging module 1000 in the present application adopts the linear array image source 1100, compared with the way of directly using an area array image source in the related art. If the same viewing angle is required, the volume of the imaging module 1000 can be further reduced by scanning the light from the linear array image source 1100 with the scanning MEMS mirror 3000 to obtain an area array image.

It should be noted that the position of the first planar mirror 1301 should be reasonably designed in order to make the light reflected from the first planar mirror 1301 to the refractive curved mirror 1200 finally propagate to the second planar mirror 1302.

Specifically, an included angle between a mirror surface of the first planar mirror and a chord of a curved surface of the refractive curved mirror is A, where A satisfies: 2 degrees ≤ A ≤ 8 degrees, so as to improve the reflection effect of light between the refractive curved mirror 1200 and the first planar mirror 1301, ensure that the light not only is reflected between the refractive curved mirror 1200 and the first planar mirror 1301 for many times, but also can be reflected from the refractive curved mirror 1200 to the second planar mirror 1302 in time, and achieve a good imaging effect.

If A is greater than 8 degrees, the number of reflections between the refractive curved mirror 1200 and the first planar mirror 1301 will be too few, the number of the optical layers will be too few, and the object distance will be short, making it difficult to achieve a good imaging effect.

If A is less than 2 degrees, it will lead to too many reflections of light between the refractive curved mirror 1200 and the first planar mirror 1301, resulting in too long propagation paths and time of light between the refractive curved mirror 1200 and the first planar mirror 1301. It should be noted that if Ais 0 degree, with multiple reflections between the refractive curved mirror 1200 and the first planar mirror 1301, the light will propagate away from the second planar mirror 1302, and the light cannot be reflected from the refractive curved mirror 1200 to the second planar mirror 1302.

In some embodiments, in order to adapt the position of the first planar mirror 1301, the position of the second planar mirror 1302 should also be designed accordingly, so that the second planar mirror 1302 can reflect light and light can be emitted from the imaging module 1000. Specifically, an included angle between a mirror surface of the first planar mirror and a mirror surface of the second planar mirror is C, where C satisfies: 177 degrees ≤ C ≤ 183 degrees.

If C is less than 177 degrees, the light will not be emitted from the imaging module 1000 after being reflected by the second planar mirror 1302. If C is greater than 183 degrees, the image quality will be polluted due to the internal reflection stray light of the transmission surface 2100 of the optical waveguide lens 2000.

It can be understood that an included angle between the first planar mirror 1301 and the second planar mirror 1302 is 0 degree as a reference, and the range of the inclination of the second planar mirror 1302 to both sides is ±3 degrees.

Specifically, the end of the mirror surface of the second planar mirror 1302 far from the first planar mirror 1301 can be inclined to the side where the refractive curved mirror 1200 is located by at most 3 degrees, where C is an obtuse angle. Alternatively, the mirror surfaces of the first planar mirror 1301 and the second planar mirror 1302 are coplanar. Alternatively, the end of the mirror surface of the second planar mirror 1302 far away from the first planar mirror 1301 can be inclined to the side where the refractive curved mirror 1200 is located by at most 3 degrees, where C is an angle greater than 180 degrees.

In some embodiments, in order to realize that the light from the linear array image source 1100 can be reflected to the first planar mirror 1301 after being incident on the refractive curved mirror 1200, and the reflection path and reflection times between the refractive curved mirror 1200 and the first planar mirror 1301 are reasonable, the incidence angle of the light from the linear array image source 1100 should also be designed accordingly.

Specifically, an incidence angle of the light from the linear array image source on the refractive curved mirror is B, where B satisfies: 3 degrees ≤ B ≤ 12 degrees. It should be noted that the incidence angle refers to the included angle between the incidence light and the normal line of the incidence surface.

If B is less than 3 degrees, the light cannot propagate to the first planar mirror 1301, or the number of reflections between the refractive curved mirror 1200 and the first planar mirror 1301 is insufficient. If B is greater than 12 degrees, the reflection path of light on the refractive curved mirror 1301 will deviate too far away from the second planar mirror 1302, which will lead to the difficulty of reflecting light to the second planar mirror 1301 finally and the great increase of the thickness of the imaging module 1000.

In some examples, B satisfies: 5 degrees ≤ B ≤ 12 degrees.

Regarding the structure of the imaging module 1000, there are at least the following alternative embodiments.

In some alternative embodiments, the imaging module 1000 includes a solid light-transmitting structure 1400 and a linear array image source 1100. The structure of the linear array image source 1100 is as described above. A surface of the solid light-transmitting structure 1400 is coated with a reflective film to form the refractive curved mirror 1200, the first planar mirror 1301, and the second planar mirror 1302. The first planar mirror 1301 is closer to the emitting surface of the imaging module 1000 than the second planar mirror 1302.

It can be understood that the reflection of light in the solid light-transmitting structure 1400 is propagation through the light-transmitting medium.

It should be noted that when the imaging module 1000 is hollow and the light propagates through transparent medium, the emitted light will be refracted (the light direction will change) when it enters the optical waveguide lens 2000. If the light-transmitting medium of the solid light-transmitting structure 1400 which is replaceably configured in the imaging module 1000 propagates light, the emitted light will not be refracted when it enters the optical waveguide lens 2000 (the light direction will not change). However, since the light angle in the optical waveguide lens 2000 is fixed and unchangeable, in this case, it is difficult to obtain an expected light direction in the optical waveguide lens 2000 without changing the positions of the first planar mirror 1301 and the second planar mirror 1302.

The light from the linear image source 1100 is incident on the solid light-transmitting structure 1400, and the light is deflected to the side where the first planar mirror 1301 is located, and the light is reflected between the refractive curved mirror 1200 and the first planar mirror 1301 at least twice. After that, the refractive curved mirror 1200 reflects the light to the second planar mirror 1302, and the light is reflected by the second planar mirror 1302 and then emitted from the imaging module 1000. It should be noted that the second planar mirror 1302 reflects the light once.

An included angle between a mirror surface of the first planar mirror and a chord of a curved surface of the refractive curved mirror is A, where A satisfies: 2 degrees ≤ A ≤ 8 degrees.

An included angle between a mirror surface of the first planar mirror and a mirror surface of the second planar mirror is C, where C satisfies: 140 degrees ≤ C ≤ 150 degrees.

In order to ensure that the light reflected by the second planar mirror 1302 can be emitted from the imaging module 1000, the position of the second planar mirror 1302 should be designed accordingly. Specifically, an included angle between a mirror surface of the second planar mirror and a chord of a curved surface of the refractive curved mirror is E, where E satisfies: 30 degrees ≤ E ≤ 40 degrees.

It can be understood that if the size of E exceeds the above range, the emitted light from the imaging module 1000 cannot be coupled into the optical waveguide lens 2000. Even if light is coupled into the optical waveguide lens 2000, the field of view angle of the whole near-eye display device will be reduced.

Based on the related structure introduction of the imaging module 1000, descriptions of the structure and display method of the near-eye display device will be supplemented below.

The display method of the near-eye display device is as follows: the light from the linear array image source 1100 is incident on the refractive curved mirror 1200, and the light is reflected between the refractive curved mirror 1200 and the first planar mirror 1301 at least twice. The refractive curved mirror 1200 reflects the light to the second planar mirror 1302, and after being reflected by the second planar mirror, the light is emitted from the imaging module to the optical waveguide lens 2000. The second planar mirror 1302 reflects the light once. The light enters the optical waveguide lens 2000, propagates from the transmission surface 2100 of the optical waveguide lens 2000 to the scanning MEMS mirror 3000, and the scanning MEMS mirror 3000 reflects the light and makes the light incident on the optical waveguide lens 2000 from the transmission surface 2100. The light propagates in the optical waveguide lens 2000, and the optical waveguide lens 2000 splits the light and emits it. The split light is emitted from the optical waveguide lens 2000 to the user's eyes, so that the user can observe a good imaging effect.

After being processed by the scanning MEMS mirror 3000 and the optical waveguide lens 2000, the light is split and emitted to the area watched by human eyes 4000, so that users can observe a complete imaging picture.

It should be noted that the transmission surface 2100 is configured as a light-transmitting inclined surface. Specifically, the transmission surface 2100 is obliquely arranged with respect to the length extension direction of the optical waveguide lens 2000.

Further, the incidence angle of the light reflected by the second planar mirror 1302 entering the optical waveguide lens 2000 is D. The incidence angle D of the light rays processed by the refractive curved mirror 1200, the first planar mirror 1301 and the second planar mirror 1302 entering the optical waveguide lens 2000 satisfies: 60 degrees ≤ D ≤ 80 degrees.

If D is less than 60 degrees, the image quality will be polluted due to the internal reflection stray light of the transmission surface 2100 of the optical waveguide lens 2000. If D is greater than 80 degrees, the light transmittance will be greatly reduced.

In some embodiments, the optical waveguide lens 2000 is configured as an array optical waveguide lens, and the light propagates in the array optical waveguide lens in a total reflection manner until it meets the spectral reflection film inside the array optical waveguide lens, so as to split and emit the light.

In other alternative embodiments, the optical waveguide lens 2000 is configured as a diffractive optical waveguide lens.

Of course, it can be understood that the optical waveguide lens 2000 can also be configured as other lens structures that can realize light splitting.

Based on the above introduction of the imaging module 1000, the near-eye display device and the display method, descriptions of the structure of the linear array image source 1100 will be supplemented below.

In some embodiments, the linear array image source 1100 is configured as a single-row pixel image source.

In other alternative embodiments, the linear array image source 1100 is configured as a multi-line pixel image source to improve the brightness of the picture observed by human eyes.

Taking the linear array image source 1100 as a five-line pixel image source as an example, the near-eye display device displays the image information of the first to fifth lines of the frame picture in the first line period, the second to sixth lines of the frame picture in the second line period, and third to seventh lines of the frame picture in the third line period. This scroll until the last 5 lines of the frame picture.

The content of the display method in the present application will be described in detail with specific examples. It should be noted that the following description is only an illustration, not a specific limitation of the present application.

In some embodiments, in the imaging module 1000, the light from the linear image source 1100 is incident on the refractive curved mirror 1200, and the light is reflected twice between the refractive curved mirror 1200 and the first planar mirror 1301.

The specific reflection path of light between the refractive curved mirror 1200 and the first planar mirror 1301 is as follows:
The light emitted by the linear array image source 1100 passing through the incidence groove 1303 is the first incidence light of the refractive curved mirror 1200. The light reflected by the refractive curved mirror 1200 is the first reflected light of the refractive curved mirror 1200, and is located on the side of the first incidence light far from the second planar mirror 1302.

The first reflected light of the refractive curved mirror 1200 is the first incidence light of the first planar mirror 1301. The light reflected by the first planar mirror 1301 is the first reflected light of the first planar mirror 1301, and is located on the side of the first incidence light of the first planar mirror 1301 far from the second planar mirror 1302.

The first reflected light of the first planar mirror 1301 is the second incidence light of the refractive curved mirror 1200. The light reflected by the refractive curved mirror 1200 is the second reflected light of the refractive curved mirror 1200, and is located on the side of the second incidence light of the refractive curved mirror 1200 far from the second planar mirror 1302.

The second reflected light of the refractive curved mirror 1200 is the second incidence light of the first planar mirror 1301. The light reflected by the first planar mirror 1301 is the second reflected light of the first planar mirror 1301, and is located on the side of the second incidence light of the first planar mirror 1301 adjacent to the second planar mirror 1302.

The second reflected light of the first planar mirror 1301 is the third incidence light of the refractive curved mirror 1200. The light reflected by the refractive curved mirror 1200 is the third reflected light of the refractive curved mirror 1200, and is located on the side of the third incidence light of the refractive curved mirror 1200 adjacent to the second planar mirror 1302.

The third reflected light of the refractive curved mirror 1200 is the incidence light of the second planar mirror 1302. The light reflected by the second planar mirror 1302 is the reflected light of the second planar mirror 1302, and is located on the side of the incidence light of the second planar mirror 1302 far from the first planar mirror 1301.

The light reflected by the second planar mirror 1302 is emitted from the imaging module 1000 and incident on the optical waveguide lens 2000.

It can be understood that the light emitted by the imaging module 1000 is processed by the scanning MEMS mirror 3000 and the optical waveguide lens 2000 as described above.

It should be noted that the light reflected by the second planar mirror 1302 can enter the optical waveguide lens 2000 at a large incidence angle of 60 degrees to 80 degrees.

The embodiments of the present application have been described in detail with reference to the attached drawings. However, the present application is not limited to the above embodiments. Various changes can be made within the knowledge of those skilled in the art without departing from the purpose of the present application. **In** addition, embodiments of the present application and features in the embodiments can be combined with each other without conflict.

## Claims

1. An imaging module (1000), comprising:
a linear array image source (1100),
a refractive curved mirror (1200),
a first planar mirror (1301) and a second planar mirror (1302), wherein the first planar mirror (1301) and the second planar mirror (1302) are both located on a same side as a mirror surface of the refractive curved mirror (1200), the first planar mirror (1301) and the second planar mirror (1302) are spaced apart to form an incidence groove (1303) for light from the linear array image source (1100);
wherein the light from the linear array image source (1100) is reflected between the refractive curved mirror (1200) and the first planar mirror (1301) at least twice, the refractive curved mirror (1200) reflects the light to the second planar mirror (1302), and after being reflected by the second planar mirror (1302), the light is emitted from the imaging module (1000), the second planar mirror (1302) is closer to an emitting surface of the imaging module (1000) than the first planar mirror (1301).

2. The imaging module (1000) of claim 1, wherein the imaging module (1000) is replaceably configured to include a solid light-transmitting structure (1400) and the linear array image source (1100), a surface of the solid light-transmitting structure (1400) is coated with a reflective film to form the refractive curved mirror (1200), the first planar mirror (1301), and the second planar mirror (1302), the first planar mirror (1301) is closer to the emitting surface of the imaging module (1000) than the second planar mirror (1302).

3. The imaging module (1000) of claim 1 or 2, wherein an included angle between a mirror surface of the first planar mirror (1301) and a chord of a curved surface of the refractive curved mirror (1200) is A, and A satisfies: 2 degrees ≤ A ≤ 8 degrees.

4. The imaging module (1000) of claim 1, wherein an included angle between a mirror surface of the first planar mirror (1301) and a mirror surface of the second planar mirror (1302) is C, and C satisfies: 177 degrees ≤ C ≤ 183 degrees.

5. The imaging module (1000) of claim 2, wherein an included angle between a mirror surface of the first planar mirror (1301) and a mirror surface of the second planar mirror (1302) is C, and C satisfies: 140 degrees ≤ C ≤ 150 degrees.

6. The imaging module (1000) of claim 1 or 2, wherein an incidence angle of the light from the linear array image source (1100) on the refractive curved mirror (1200) is B, and B satisfies: 3 degrees ≤ B ≤ 12 degrees.

7. The imaging module (1000) of claim 2, wherein an included angle between a mirror surface of the second planar mirror (1302) and a chord of a curved surface of the refractive curved mirror (1200) is E, and E satisfies: 30 degrees ≤ E ≤ 40 degrees.

8. A near-eye display device, comprising:
a scanning MEMS, Micro Electron Mechanical Systems, mirror (3000),
an optical waveguide lens (2000), and
the imaging module (1000) of any of claims 1 to 7;
wherein one side of the imaging module (1000) on which light is emitted is adjacent to the optical waveguide lens (2000), one end of the optical waveguide lens (2000) adjacent to the imaging module (1000) is provided with a transmission surface (2100), the transmission surface (2100) is configured as a light-transmitting inclined plane, the scanning MEMS mirror (3000) is adjacent to the transmission surface (2100).

9. The near-eye display device of claim 8, wherein the optical waveguide lens (2000) is configured as an array optical waveguide lens or a diffractive optical waveguide lens.

10. A head-mounted display device comprising the near-eye display device of claim 8 or 9.
